**Europäisches Patentamt**

**European Patent Office**

**Office européen des brevets**

(19)

(11) Veröffentlichungsnummer: **0 126 185**
**B1**

(12)

# EUROPÄISCHE PATENTSCHRIFT

(45) Veröffentlichungstag der Patentschrift:
**05.11.86**

(21) Anmeldenummer: **83112960.6**

(22) Anmeldetag: **22.12.83**

(51) Int. Cl.⁴: **G 01 L 1/10**

(54) **Kraftmessanordnung mit einer schwingenden Saite.**

(30) Priorität: **26.04.83 CH 2224/83**

(43) Veröffentlichungstag der Anmeldung:
**28.11.84 Patentblatt 84/48**

(45) Bekanntmachung des Hinweises auf die Patenterteilung:
**05.11.86 Patentblatt 86/45**

(84) Benannte Vertragsstaaten:
**DE FR GB IT NL**

(56) Entgegenhaltungen:
**CH-A-533 299**
**DE-A-2 745 915**
**DE-A-3 142 165**
**US-A-3 465 597**

(73) Patentinhaber: **Mettler Instrumente AG, CH- 8606 Greifensee (CH)**

(72) Erfinder: **Willi, Ernst, Hanflandstrasse 19, CH- 8635 Oberdürnten (CH)**
Erfinder: **Flückiger, Hans- Ulrich, Heusserstrasse 11, CH- 8634 Hombrechtikon (CH)**

LIBER, STOCKHOLM 1986

EP 0 126 185 B1

## Beschreibung

Die Erfindung betrifft eine Kraftmessanordnung mit einer stromdurchflossenen, im Kraftfeld eines Magneten schwingenden Saite, die zwischen einer Konsole und einem beweglichen Kraftübertragungsorgan eingespannt und mit einer elektrischen Ausrüstung zum Betrieb der Messanordnung verbunden ist. Eine verglichbare Anordung wird z.B. in der DE-A-2 745915 beschrieben.

Zur Erzielung einer hohen Messgenauigkeit solcher Kraftmessanordnungen ist man bestrebt, durch gute Entkopplung der Saite von den anschliessenden Teilen (Konsole, bewegliches Kraftübertragungsorgan) eine hohe Schwinggüte der Saite mit scharfer Resonanz zu erreichen. Geeignete Massnahmen zu dieser Entkopplung sind beispielsweise in der CH-A-533 299 beschrieben. Diese Massnahmen beziehen sich jedoch ausschliesslich auf die Konstruktion dar Saite.

Ein zusätzliches Problem in dieser Beziehung stellen die Mittel für die Stromzufuhr zur Saite dar. Ueblicherweise benützt man dazu dünne, flexible Drähte, die an die Saitenenden angeschlossen, z.B. angelötet werden, wie das beispielsweise in der US-A-3 465 597 (Fig. 6) und in der DE-A-1 42 165 (Fig. 3) angedeutet ist, wobei im ersten Fall die Anschlußstelle vor der Einspannstelle und im zweiten Fall dahinter vorgesehen ist. Eine gewisse Dämpfung der Saitenschwingung durch die Stromzuführungen ist vor allem bei vor der Einspannstelle, d.h. innerhalb der kraftmässig beanspruchten Regionen der Saite liegendern Anschluss nicht vermeidbar, auch wenn zwischen dem aktiven Teil der Saite und der Anschlußstelle Entkopplungsmittel vorgesehen sind.

Nachteilig sind die Anschlußstellen zudem durch ihre Uebergangswiderstände, welche in der elektrischen Ersatzschaltung des Saitenschwingers einen Seriewiderstand bilden, der die Resonanzüberhöhung bestimmt. Dabei sind auch die Anschlußstellen der Drähte an der elektrischen Ausrüstung, z.B. an den Strombahnen einer Schaltungsplatine, zu berücksichtigen. Um für die Resonanzüberhöhung ein hohes und in bezug auf eine Serienfertigung gleichbleibendes Mass zu erzielen, muss der Seriewiderstand möglichst klein und konstant sein. Diese Voraussetzungen sind jedoch bekanntlich bei einer Lötstelle in der Regel nur schwer zu verwirklichen, insbasondare wann es sich um den Anschluss dünner Drähte, also um eher kleinflächige Lötstellen handelt und wie üblich lackisolierte Drähte verwendet werden. Ausserdem sind Stromzuführungen dieser Art leicht verletzbar und für die rationelle Fertigung wenig geeignet.

Der Erfindung liegt die Aufgabe zugrunde, die Stromzuführungen derart zu gestalten, dass die beschriebenen nachteiligen Einflüsse bisheriger Ausführungen vermieden werden.

Die erfindungsgemässe Lösung besteht darin, dass ausgehend von der eingangs angegebenen Kraftmessanordnung über die Einspannstellen hinaus verlängerte Saitenenden als Stromzuführungen ausgebildet und auf einer die elektrische Ausrüstung tragenden, an der Konsole angebrachten Schaltungsplatine befestigt sind. Vorzugsweise sind die verlängerten Saitenenden unmittelbar an Strombahnen der Schaltungsplatine angeschlossen, z.B. angelötet.

Durch den Wegfall separater Stromzuführungsdrähte lassen sich die Uebergangswiderstände erheblich herabsetzen und stabilisieren, insbesondere wenn zudem noch die Saitenenden im elektrischen Anschlussbereich im Vergleich zu den Querschnittsdimensionen der Saite breitflächig gestaltet sind.

Für die Herstellung erfindungsgemäss ausgebildeter Saiten ist die Stanz-Biegetechnik im Hinblick auf eine Serienproduktion besonders geeignet DE-A-31 42 165), da für die Bildung der Stromzuführungen kein separater Arbeitsgang erforderlich ist. Die Befestigung der Saitenenden an der Schaltungsplatine bzw. die Kontaktierung ist verhältnismässig einfach zu bewerkstelligen und kann problemlos in einen die ganze Schaltungsplatine umfassenden, vorzugsweise automatischen Lötvorgang einbezogen werden.

Auf diese Weise hergestellte Stromzuführungen zeichnen sich durch einen geringen, definierten Seriewiderstand und grosse Stabilität aus. Rückwirkungen auf das Messsystem lassen sich durch gleichbleibende Form der Stromzuführungen in bestimmten Grenzen halten.

Bei bisherigen Ausführungen der Kraftmessanordnung dient zur Vorspannung der Saite gewöhnlich eine am beweglichen Kraftübertragungsorgan angreifende Feder. Im Rahmen der Erfindung besteht nun die Möglichkeit, dass über die Einspannstelle am beweglichen Kraftübertragungsorgan hinaus verlängerte Saitenende zugleich als Spannfeder zur Vorspannung der Saite auszubilden. Dadurch kann eine separate Spannfeder entfallen, was den Aufbau der Kraftmessanordnung weiter vereinfacht. Eine besonders stabile Ausführung ergibt sich in diesem Zusammenhang, wenn ein für die Befestigung der Schaltungsplatine an der Konsole vorgesehenes Befestigungsmittel, z.B. eine Schraubenverbindung, zugleich zur Befestigung des als Spannfeder ausgebildeten Saitenendes an der Schaltungsplatine dient.

In der Zeichnung ist ein Ausführungsbeispiel der Erfindung dargestellt, und zwar zeigen:

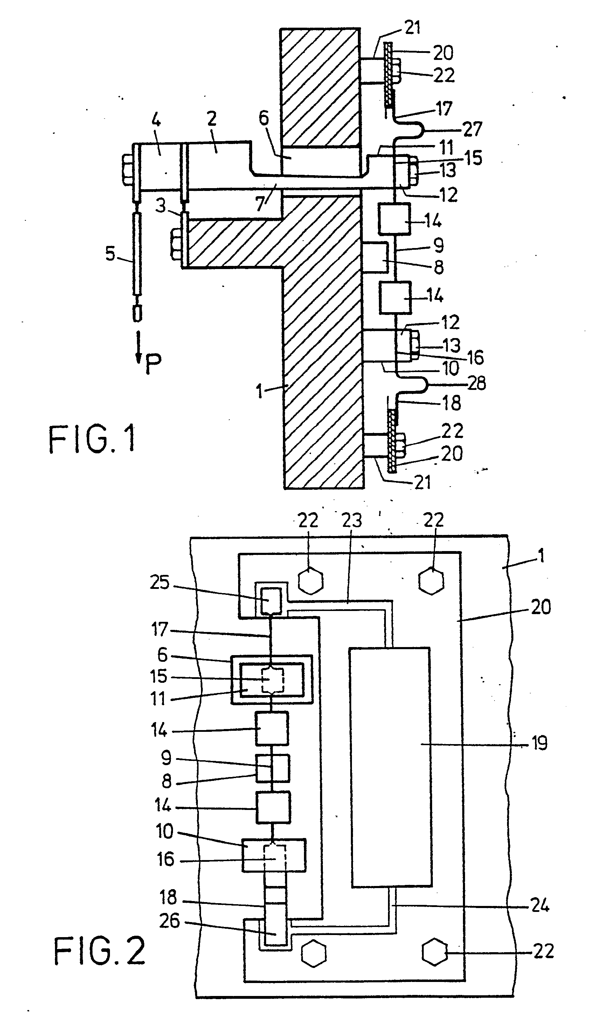

Fig. 1 eine Seitenansicht der erfindungsgemässen Kraftmessanordnung und
Fig. 2 eine Frontansicht derselben.

Beim Ausführungsbeispiel handelt es sich um die Kraftmessanordnung einer Wägezelle für den Einsatz in Waagen. Von dieser Wägezelle sind in der Zeichnung nur die mit dem Messsystem (Saitenschwinger) unmittelbar

0 126 185

zusammenwirkenden mechanischen Teile dargestellt.

An der Konsole 1 ist ein als Kraftumsetzer dienender, zweiarmiger Hebel 2 gelagert. Zur Lagerung dieses Hebels 2 ist ein Biegelager in Form einer Blattfeder 3 mit örtlich konzentrierter Biegestelle vorgesehen. Am kürzeren, starren Hebelarm 4 greift ein biegeelastischer Lenker 5 an, über den die zu bestimmende Kraft P eingeleitet wird. Beispielsweise ist dieser Lenker 5 über ein Gehänge mit einem Lastaufnehmer verbunden. Der längere, durch eine Oeffnung 6 der Konsole 1 ragende Hebelarm 7 bildet ein biegeelastisches Kraftübertragungsorgan.

Eine stromdurchflossene, im Kraftfeld eines Magneten 8 schwingende Saite 9 ist zwischen der Konsole 1 und dem Kraftübertragungsorgan eingespannt. Dazu ist an einem Ansatz 10 der Konsole 1 und am freien Ende 11 des Hebelarms 7 je eine Haltevorrichtung, bestehend aus einer Klemmplatte 12 und einer Klemmschraube 13, vorgesehen. Die Saite 9 ist mit Knotenmassen 14 ausgerüstet, die beispielsweise in der in der DE-Offenlegungsschrift 31 42 165 beschriebenen Art ausgebildet sein können. An den Einspannstellen 16 und 16 ist die Saite 9 verbreitert, wie dies in Fig. 2 durch gestrichelte Linien angedeutet ist.

Die Saitenenden 17 und 18 sind über die Einspannstellen 15 und 16 hinaus verlängert und als Stromzuführungen ausgebildet, welche die Saite 9 mit einer elektrischen Ausrüstung 19 zum Batrieb der Kraftmessanordnung verbinden. Diese nur schematisch als Block gezeigte elektrische Ausrüstung 19 umfasst beispielsweise einen Oszillator zur Anregung und Aufrechterhaltung der Saitenschwingung sowie einen Frequenzmasser, dessen Ausgangssignal ein Mass für die zu bestimmande Kraft P darstellt. Träger der elektrischen Ausrüstung 19 ist eine Schaltungsplatine 20, welche auf Stützan 21 mit Schrauben 22 an der Konsole 1 befestigt ist.

Die als Stromzuführungen dienenden Saitenenden 17 und 18 sind an der Schaltungsplatine 20 befestigt und an Strombahnen 23 und 24 angeschlossen, welche zur elektrischen Ausrüstung 19 führen. Dabei sind die Saitenenden 17 und 18 im elektrischen Anschlussbereich 25 bzw. 26 verbreitert und im vorliegenden Beispiel an die Strombahnen 23 und 24 angelötet. Anstatt Lötverbindungen können auch Schraubverbindungen vorgesehen sein. Um eine Beeinflussung des Messsystems und mechanische Belastungen der Lötverbindungen durch die Stromzuführungen zu vermeiden, weisen die verlängerten Saitenenden 17 und 18 eine ungestreckte Form auf, und zwar sind sie im vorliegenden Beispiel mit einem Bogen 27 bzw. 28 versehen. Das über die Einspannstelle 15 am beweglichen Kraftübertragungsorgan 7 hinaus verlängerte Saitenende 17 ist vorzugsweise als weichelastische Feder ausgebildet und dementsprechend dünn gehalten, während das andere Saitenende 18 gleich breit ist wie an der Einspannstelle 16 und im Anschlussbereich 26.

Bei einer anderen Ausführungsform kann das über die Einspannstelle 15 am beweglichen Kraftübertragungsorgan 7 hinaus verlängerte Saitenende 17 zugleich als Spannfeder zur Vorspannung der Saite 9 ausgebildet sein. Die Spannfeder kann z.B. mäanderförmig sein oder, insbesondere im Falle einer flachen Messaite, jede andere, mit der Stanz-Biegetechnik realisierbare Form aufweisen. Mit Rücksicht auf stabile Kraftverhältnissa kann as von Vorteil sein, wenn eine für die Befestigung der Schaltungsplatine 20 an der Konsole 1 vorgesehene Schraubenverbindung zugleich zur Befestigung des als Spannfeder ausgebildeten Saitenendes 17 an der Schaltungsplatine 20 dient. Dazu wäre in dem in der Zeichnung dargestellten Beispiel lediglich eine Befestigungsschraube 22 in den Anschlussbereich 25 zu verlegen. In diesem Anschlussbereich könnte dann die Lötverbindung wegfallen.


**Patentansprüche**

1. Kraftmessanordnung mit einer stromdurchflossenen, im Kraftfeld eines Magneten (8) schwingenden Saite (9), die zwischen einer Konsole (1) und einem beweglichen Kraftübertragungsorgan (7) eingespannt und mit einer elektrischen Ausrüstung (19) zum Betrieb der Messanordnung verbunden ist, dadurch gekennzeichnet, dass über die Einspannstellen (15, 16) hinaus verlängerte Saitenenden (17, 18) als Stromzuführungen ausgebildet und auf einer die elektrische Ausrüstung (19) tragenden, an der Konsole (1) angebrachten Schaltungsplatine (20) befestigt sind.

2. Kraftmessanordnung nach Anspruch 1, dadurch gekennzeichnet, dass die verlängerten Saitenenden (17,18) an Strombahnen (23, 24) der Schaltungsplatine (20) angeschlossen, z.B. angelötet sind.

3. Kraftmessanordnung nach Anspruch 2, dadurch gekennzeichnet, dass die Saitenenden (17, 18) im elektrischen Anschlussbereich (25, 26) im Vergleich zu den Querschnittsdimensionen der Saite (9) breitflächig gestaltet sind.

4. Kraftmessanordnung nach Anspruch 1, dadurch gekennzeichnet, dass die verlängerten Saitenenden (17, 18) eine ungestreckte Form aufweisen.

5. Kraftmessanordnung nach Anspruch 4, dadurch gekennzeichnet, dass das über die Einspannstelle (15) am beweglichen Kraftübertragungsorgan (7) hinaus verlängerte Saitenende (17) als weichelastische Feder ausgebildet ist.

6. Kraftmessanordnung nach Anspruch 1, dadurch gekennzeichnet, dass das über die Einspannstelle (15) am beweglichen Kraftübertragungsorgan (7) hinaus verlängerte Saitenende (17) zugleich als Spannfeder zur Vorspannung der Saite (8) ausgebildet ist.

7. Kraftmessanordnung nach Anspruch 6, dadurch gekennzeichnet, dass ein für die Befastigung dar Schaltungsplatina (20) an der Konsole (1) vorgesehenes Befestigungsmittel, z.B. eine Schraubenverbindung (22), zugleich zur Befestigung des als Spannfeder ausgebildeten Saitenendes (17) an dar Schaltungsplatine (20) dient.

## Claims

1. Force measuring device comprising a current-conducting string (9) oscillating within the field of a magnet (8), the string being mounted between a frame (1) and a movable force transmission member (7) and being connected with an electrical equipment (19) for operating the measuring device, characterized in that end portions (17, 18) of the string extending beyond the fixing areas (15, 16) are formed as current contacts and are attached to a circuit board (20) mounted at the frame (1) and comprising the electrical equipment (19).

2. Force measuring device as in claim 1, characterized in that the extending string end portions (17, 18) are connected (e.g. soldered) to electrical conductors (23, 24) on the circuit board (20).

3. Force measuring device as in claim 2, characterised in that the string end portions (17, 18) in the area (25, 26) of the electrical connections are enlarged relative to the crossectional dimensions of the string (9).

4. Force measuring device as in claim 1, characterised in that the extended string end portions (17, 18) have an unstretched shape.

5. Force measuring device as in claim 4, characterized in that the string end (17) extending beyond the fixing area (15) near the movable force transmission member (7) is formed as a highly resilient spring.

6. Force measuring device as in claim 1, characterized in that the string end (17) extending beyond the fixing area (15) near the movable force transmission member (7) is formed as a spring for prestraining the string (9).

7. Force measuring device as in claim 6, characterized in that a fastening means (e.g. a screw 22) provided for mounting the circuit board (20) at the frame (1) also serves for fixing the string end portion (17) formed as a tension spring to the circuit board (20).

## Revendications

1. Dispositif mesureur de forces, équipé d'une corde (9) qui est parcourue par un courant, vibre dans le champ de force d'un aimant (8), est fixée entre une console (1) et un organe mobile (7) transmetteur de forces, et est raccordée à un équipement électrique (19) en vue de l'exploitation du dispositif mesureur, caractérisé par le fait que des extrémités (17, 18) de la corde, prolongées au-delà des zones d'encastrement (15, 16), sont réalisées en tant qu'alimentations en courant, et sont fixées sur une platine de commutation (20) qui porte l'équipement électrique (19) et est installée sur la console (1).

2. Dispositif mesureur de forces selon la revendication 1, caractérisé par le fait que les extrémités prolongées (17, 18) de la corde sont raccordées, par exemple par brasage, à des pistes de courant (23, 24) de la platine de commutation (20).

3. Dispositif mesureur de forces selon la revendication 2, caractérisé par le fait que les extrémités (17, 18) de la corde sont réalisées, dans la zone de raccordement électrique (25, 26), à surface large par comparaison avec les dimensions de la section de la corde (9).

4. Dispositif mesureur de forces selon la revendication 1, caractérisé par le fait que les extrémités prolongées (17, 18) de la corde présentent une forme non allongée.

5. Dispositif mesureur de forces selon la revendication 4, caractérisé par le fait que l'extrémité (17) de la corde prolongée au-delà de la zone d'encastrement (15), sur l'organe mobile (7) transmetteur de forces, est réalisée sous la forme d'un ressort doué de souplesse élastique.

6. Dispositif mesureur de forces selon la revendication 1, caractérisé par le fait que l'extrémité (17) de la corde prolongée au-delà de la zone d'encastrement (15) sur l'organe mobile (7) transmetteur de forces est réalisée, en même temps, sous la forme d'un ressort de tension pour precharger ladite corde (9).

7. Dispositif mesureur de forces selon la revendication 6, caractérisé par le fait qu'un moyen de fixation, par exemple une liaison vissée (22), prévu pour fixer la platine de commutation (20) à la console (1), sert simultanément à fixer à la platine de commutation (20) l'extrémité (17) de la corde réalisée en tant que ressort de tension.

FIG.1

FIG.2

1